# EUROPEAN PATENT SPECIFICATION

(11) **EP 0 789 062 B1**
(45) Date of publication and mention of the grant of the patent: **22.01.2003**
(21) Application number: 95934868.1
(22) Date of filing: 23.10.1995
(51) Int. Cl.: C08L 101/00, C08L 101/14, C08L 75/04, C08L 51/02, C08F 2/44

(54) **WATER-ABSORBENT RESIN DISPERSION AND POLYURETHANE COMPOSITION**
WASSERABSORBIERENDE HARZDISPERSION UND POLYURETHANZUSAMMENSETZUNG
DISPERSION DE RESINE ABSORBANT L'EAU ET COMPOSITION DE POLYURETHANE

(30) Priority: 24.10.1994 JP 28420894; 07.03.1995 JP 7724195
(43) Date of publication of application: 13.08.1997
(73) Proprietor: SANYO CHEMICAL INDUSTRIES, LTD., Kyoto-shi, Kyoto 605 (JP)
(72) Inventor: OTANI, Kazuya Sanyo Chemical Industries, Ltd., Kyoto 605 (JP); MATSUOKA, Masahiro Sanyo Chemical Industries, Ltd., Kyoto 605 (JP); MAEDA, Kohei Sanyo Chemical Industries, Ltd., Kyoto-shi Kyoto 605 (JP); NAGATA, Kozaburo Sanyo Chemical Industries, Ltd., Kyoto-shi Kyoto 605 (JP); ANDO, Takao Sanyo Chemical Industries, Ltd., Kyoto-shi Kyoto 605 (JP); NAKANISHI, Toru Sanyo Chemical Industries, Ltd., Kyoto-shi Kyoto 605 (JP); ISHIKAWA, Isao Sanyo Chemical Industries, Ltd., Higashiyama-ku Kyoto-shi Kyoto 605 (JP); TSUJI, Takayuki Sanyo Chemical Industries, Ltd., Kyoto-shi Kyoto 605 (JP)
(74) Representative: Brehm, Hans-Peter
(86) International application number: PCT/JP95/02171
(87) International publication number: WO 96/012767

(56) References cited:
- EP-A- 0 119 349
- EP-A- 0 165 074
- WO-A-91/17195
- JP-A- 3 203 921
- JP-A- 4 218 502
- JP-A- 4 298 516
- US-A- 5 032 659
- US-A- 5 252 690

## Description

### TECHNICAL FIELD

The present invention relates to a water-absorbent resin dispersion and to a process for producing a polyurethane resin using said dispersion.

### BACKGROUND ART

It is known to use a polymeric polyol as part of a polyol component for the production of a polyurethane resin. Japanese Kokai Publication Sho-54-133599, for instance, discloses the use of a hydrophilic vinyl monomer in the production of such a polymeric polyol. Though polymeric polyols obtainable by using a non-hydrophilic vinyl monomer such as styrene and acrylonitrile have been demonstrated to give stable dispersions, no comparable information is available about polymeric polyols obtainable with a hydrophilic vinyl monomer. Meanwhile, a dispersion obtainable by mixing a high-molecular-weight polyol with a water-absorbent resin is known.

However, when a hydrophilic vinyl monomer is used in the production process disclosed in Japanese Kokai Publication Sho-54-133599, a stable dispersion can hardly be obtained. Moreover, the mere admixture of a high-molecular-weight polyol and a water-absorbent resin has the drawback that the water-absorbent resin may coalesce and precipitate.

The document US-A-5 032 659 is related to water-absorbing and water-swellable polysaccharide graft polymers prepared by inverse suspension polymerization of a polysaccharide with an ethylenically unsaturated monomer containing a carboxyl group followed by partial water removal and crosslinking. According to example 1 thereof, a petroleum fraction is supplied as reaction medium, and 1 g polyethylene glycol (regarded as A), and 78 g acrylic acid (common with 120 g of 25 % sodium hydroxide solution) and 1 g natural corn starch (both regarded as B, thus presenting 79 g B) are polymerized under the initation of ammonium persulfate. Thus the proportion B/(A+B) = 79/80 = 98,75 %. The known, very small amount of polyethylene glycol (regarded as A) does not and cannot serve as reaction medium and finally as dispersing agent.

The document EP-A-0 165 074 is related to an enhanced water-absorbency hydrophilic polymer material, suitable for use in for example wound dressings, which is prepared by a process in which a water-containing organic hydrogel comprising a gelable polysaccharide and/or protein or polypeptide interpersed with a polymer of a hydrophilic acrylic or methacrylic acid derivative is permeated with a base, the pH of said hydrogel being raised to at least 9 during treatment with said base, in order to increase the ability of the hydrogel to retain or absorb aqueous media. According to example 1 thereof, a large surplus amount of water is applied as reaction medium and 20 g agar-agar, 70 g acrylamide (both regarded as B), are polymerized along with 2,2 g N,N,N',N'-tetrakis(2-hydroxypropyl)-ethylenediamine (regarded as A) under the initation of ammonium peroxydisulfate. Thus the proportion B/(A+B) = 90/92,2 = 97,61 %. Again this very small amount of N,N,N',N'-tetrakis(2-hydroxypropyl)-ethylenediamine does not and cannont serve as reaction medium and finally as dispersing agent.

The document US-A-5 252 690 is related i.a. to polymer compositions highly absorbent to aqueous electrolyte solutions which are prepared by graft copolymerization of at least an olefin monomer having an ethylenic structure and a distinctive ampholytic monomer having one vinyl group onto a main polymer selected from the group consisting of polysaccharides and polyolefins. According to example 5 thereof, the reaction is carried out in an aqueous medium, and a polymer made of 12 Mol-% VSPIH (= 1-Vinyl-3-(3-sulfopropyl)imidazolium hydroxide) and 88 Mol-% acrylonitrile is graft-polymerized onto 5 g starch. None of these three components formig the polysaccharide grafted VSPIH copolymers can be regarded as a liquid or heat-meltable active hydrogen containing organic compound forming a reaction medium and finally a dispersing agent for a water-absorbent resin or a hydrous gel thereof.

### SUMMARY OF THE INVENTION

The inventors designated for the present application have searched for a water-absorbent resin dispersion capable of maintaining dispersed a small particle diameter dispersed material and providing good dispersion stability and allowing an easy manner of manufacture.

Thus, the present invention provides a water-absorbent resin dispersion comprising a water-absorbent resin (B) or a hydrous gel thereof dispersed in a liquid or heat-meltable, active hydrogen-containing organic compound (A), wherein said (B) is formed by in situ polymerization of a water-soluble monomer or a precursor thereof and a crosslinking agent and/or a ploysaccharide in said (A), and wherein a proportion of (B) relative to the combined weight of [(A) and (B)] is 1 to 70 %.

The presence of the compound (A) in such a substantial part that a proportion of (B) relative to the combined weight of [(A) and (B)] is 1 to 70 % provides a sufficient amount of dispersing agent, and hinders the dispersed particles of (B) from aggregation and improves the stability of the complete dispersion. Thus very small particles of (B) may be maintained in dispersion.

According to a preferred aspect of the present invention, either said (B) or said hydrous gel thereof dispersed in said (A) has a mean particle diameter of from 0.01 to 100 µm.

According to another preferred aspect of the present invention, said (A) is a polyol. Even more preferred said (A) is at least one member selected from the group consisting of polyether polyol, polyester polyol, polybutadiene polyol, polyvinyl alcohol, and acrylic polyol.

According to another preferred aspect of the present invention said (B) or said hydrous gel thereof is formed in said (A) by in situ polymerization of at least one vinyl monomer having a carboxyl or sulfonic acid group and a copolymerizable crosslinking agent, plus one or more other vinyl monomers where necessary, in the presence of water. The proportion of water available in the formation of said (B) or said hydrous gel may preferably range of from 5 to 50 weight % based on the total weight of said [(A), (B), and water]. In addition, said in situ polymerization may be performed in the presence of an emulsifier in addition to said water content.

The thus obtained water-absorbent resin dispersion provides a valuable starting material for preparing a polyurethane resin.

Thus a further preferred aspect of the present invention is related to a polyurethane composition comprising a water-absorbent resin (B) or a hydrous gel thereof dispersed in a polyurethane, wherein said dispersed material (B) comprises an average particle diameter of from 0.01 to 100 µm, and wherein said (B) has been formed by in situ polymerization of a water-soluble monomer or a precursor thereof in the presence of crosslinking agent and/or of a polysaccharide in a polyol which forms a precursor of said polyurethane.

A preferred process of manufacturing such a polyurethane composition in the form of a polyurethane resin comprises the step of reacting the fore-mentioned water-absorbent resin dispersion wherein the compound (A) is a polyol with an organic polyisocyanate compound.

Another preferred process of manufacturing such a polyurethane compositon in the form of a polyurethane foam comprises the step of reacting the fore-mentioned water-absorbent resin dispersion wherein the compound (A) is a polyol with an organic polyisocyanate compound in the presence of a blowing agent. In addition, the reaction mixture may contain a catalyst, a foam-conditioning agent and other well known additives.

### DETAILED DISCLOSURE OF THE INVENTION

The liquid or heat-meltable organic compound (A) containing active hydrogen includes compounds wherein the active hydrogen group is presented by alcoholic hydroxyl groups or by phenolic hydroxyl groups or by carboxyl groups or by thiol groups or by amino groups.

The compounds containing alcoholic hydroxyl groups may for example include polyether comprising monohydric alcohol groups and polyols. Among them, polyols are preferred.

Here, the polyether comprising monohydric alcohol groups may include compounds available by addition reaction of alkylene oxides to compounds each containing one active hydrogen atom (for example aliphatic, alicyclic, or arylalkyl alcohols having 1 to 20 carbon atoms, monophenols, dialkylamines, morpholine). Further included are other ether compounds (for example methyl ethers, isopropyl ethers, phenyl ethers) and ester compounds (for example acetic esters and benzoic esters) which are available by partial blocking of hydroxyl groups with alcohols or carboxylic acids.

The fore-mentioned polyols include polyether polyols, polyester polyols, polyols each having a backbone chain of carbon-carbon bonds, and amino-terminated polyols. Further, the compounds described in Polyurethane Resin Handbook (Keiji Iwata (ed.), Nikkan Kogyo Shinbun Sha, 1987) at page 99 and following pages may be mentioned. Also included are the reaction products obtainable by etherification or esterification reaction and partial blocking of the hydroxyl groups of such polyols with alcohols or carboxylic acids. Preferred, among these polyols, are polyether polyols and polyester polyols.

The polyether polyols include polyoxyalkylene polyols including those compounds which are available by addition reaction of alkylene oxides to compounds each containing at least 2 (preferably 2 to 8) active hydrogen atoms (for example polyhydric alcohols, polyphenols, polyamines, polycarboxylic acids, phosphoric acid) and mixtures thereof. Preferred, among them, are polyhydric alcohols.

The polyhydric alcohols include di- through octahydric alcohols. The dihydric alcohols (diols) include alkylene glycols such as ethylene glycol, diethylene glycol, propylene glycol, 1,3- or 1,4-butanediol, 1,6-hexanediol, neopentyl glycol, cyclohexanediol, xylylene glycol. Further diols containing cyclic groups may be siuted, such as 2,2,4,4-tetramethylcyclobutane-1,3-diol, 1,3-cyclopentanediol, 1,4-cyclohexanediol, 1,4-bis(hydroxymethyl)cyclohexane, 4,4'-methylenebis(cyclohexanol), 4,4'-isopropylidenebis(cyclohexanol), p-phenylenedi(β-hydroxypropyl ether), p-phenylenedi(β-hydroxyethyl phenyl ether), 4,4'-isopropylidenebis (β-hydroxyethyl phenyl ether), 4,4'-isopropylidenebis (β-hydroxypropyl phenyl ether). Suited trihydric alcohols (triols) include glycerol, trimethylolpropane, trimethylol ethane, hexanetriol, triethanolamine. Suited tetrahydric alcohols (tetrols) include pentaerythritol, methylene glycoside, diglycerol. Suited penta- and polyhydric alcohols include pentitols such as adonitol, arabitol, xylytol, or hexitols such as sorbitol, mannitol, iditol, talitol, dulcitol; further sugars including monosaccharides such as glucose, mannose, fructose, sorbose, and oligosaccharides such as sucrose, trehalose, lactose, raffinose; further glycosides of various glycols such as ethylene glycol, propylene glycol, further glycerol, trimethylolpropane, hexanetriol; further polyglycerols such as triglycerol, tetraglycerol; further polypentaerythritols such as dipentaerythritol, tripentaerytrhritol and further tetrakis(hydroxymethyl)cyclohexanol.

Suited polyphenols include monocyclic polyphenols such as pyrogallol, hydroquinone, phloroglucinol; further bisphenols such as bishenol A, bisphenol sulfone; further phenolformaldehyde condensates (Novolac) such as the polyphenols described in US Patent 3265641.

Suited amines include ammonia, aliphatic amines, alicyclic amines, heterocyclic amines, and aromatic amines. Suited aliphatic amines include alkanolamines such as mono-, di-, and tri-ethanolamines, isopropanol amine, aminoethylethanolamine; further alkylamines having 1 to 20 carbon atoms; further alkylenediamines having 2 to 6 carbon atoms such as ethylenediamine, propylenediamine, hexamethylenediamine; and further polyalkylenepolyamines such as diethylenetriamine and triethylenetetramine; suited alicyclic amines include isophoronediamine, cyclohexylenediame and dicyclohexylmethanediamine.

Suited heterocyclic amines include piperazine and alkyl-substituted piperazines such as methylpiperazine, ethylpiperazine, propylpiperazine, butylpiperazine, hexylpiperazine, dimethylpiperazine, diethylpiperazine, dipropylpiperazine, dibutylpiperazine, dihexylpiperazine, tetramethylpiperazine; further piperidine and alkyl-substituted piperidines such as methylpiperidine, ethylpiperidine, propylpiperidine, butylpiperidine, hexylpiperidine, dimethylpiperidine, diethylpiperidine, dipropylpiperidine, dibutylpiperidine, dihexylpiperidine, tetramethylpiperidine; further imidazolidine and alkyl-substituted imidazolidines such as methylimidazolidine, ethylimidazolidine, propylimidazolidine, butylimidazolidine, dimethylimidazolidine, diethylimidazolidine, dipropylimidazolidine, dibutylimidazolidine; further pyrazolidine and alkyl-substituted pyrazolidines such as methylpyrazolidine, ethylpyrazolidine, propylpyrazolidine, butylpyrazolidine, dimethylpyrazolidine, diethylpyrazolidine, dipropylpyrazolidine, dibutylpyrazolidine; further imidazole and alkyl-substituted imidazoles such as methylimidazole, ethylimidazole, propylimidazole, butylimidazole, dimethylimidazole, diethylimidazole, dipropylimidazole, dibutylimidazole; further pyrazole and alkyl-substituted pyrazoles such as methylpyrazole, ethylpyrazole, propylpyrazole, butylpyrazole, dimethylpyrazole, diethylpyrazole, dipropylpyrazole, dibutylpyrazole; further pyrazoline and alkyl-substituted pyrazolines such as methylpyrazoline, ethylpyrazoline, propylpyrazoline, butylpyrazoline, dimethylpyrazoline, diethylpyrazoline, dipropylpyrazoline, dibutylpyrazoline; further pyrrolidine and alkyl-substituted pyrrolidines such as methylpyrrolidine, ethylpyrrolidine, propylpyrrolidine, butylpyrrolidine, dimethylpyrrolidine, diethyl pyrrolidine, dipropylpyrrolidine, dibutylpyrrolidine; further morpholine and alkyl-substituted morpholines such as methylmorpholine, ethylmorpholine, propylmorpholine, butylmorpholine, dimethylmorpholine, diethylmorpholine, dipropylmorpholine, dibutylmorpholine; further amino alkyl-substituted piperazines such as aminomethylpiperazine, aminoethylpiperazine, aminopropylpiperazine, aminobutylpiperazine, aminohexylpiperazine, aminodimethylpiperazine, aminodiethylpiperazine, aminodipropylpiperazine, aminodibutylpiperazine, aminodihexylpiperazine, aminotetramethylpiperazine; further aminoalkyl-substituted imidazolidines such as aminomethylimidazolidine, aminoethylimidazolidine, aminopropylimidazolidine, aminobutylimidazolidine, aminodimethylimidazolidine, aminodiethylimidazolidine, aminodipropylimidazolidine, aminodibutylimidazolidine; further pyrazolidine and aminoalkyl-substituted pyrazolidines such as aminomethylpyrazolidine, amino ethylpyrazolidine, aminopropylpyrazolidine, aminobutylpyrazolidine, aminodimethylpyrazolidine, aminodiethylpyrazolidine, aminodipropylpyrazolidine, aminodibutylpyrazolidine.

Suited aromatic amines include aniline, phenylenediamine, diaminotoluene, xylylenediamine, methylenedianiline, diphenyl ether diamine.

Suited alkylene oxides (hereinafter sometimes referred to briefly as AO) which are used in the addition reaction with said active hydrogen atoms containing compounds include not only ethylene oxide and propylene oxide (which are sometimes referred to briefly as EO and PO, respectively), but also include 1,2-, 1,3-, 1,4-, or 2,3-butylene oxide, styrene oxide, and various combinations of such alkylene oxides. Preferred is propylene oxide or a combination of ethylene oxide and propylene oxide.

The mode of addition of such alkylene oxide is not particularly critical and may for example comprise the block addition method or the random addition method. For example the block addition method may provide block adduct products comprising one of the following sequences:
PO-AO (chipped);
PO-AO-PO-AO (balanced);
AO-PO-AO;
PO-AO-PO (activity secondary).

Random adduct products may be obtained by mixing PO and AO.

Further, such adduct products are suited comprising the sequence "AO-EO-PO-AO-EO" as described and prepared according to Japanese Kokai Publication Sho-57-209920.

Further, such random-block adduct products are suited as described and prepared according to Japanese Kokai Publication Sho-53-13700.

Further, those ethers (e.g. methyl ethers, isopropyl ethers, phenyl ethers.) or esters (e.g. acetic esters, benzoic esters,) are suited which are available by partial blocking of the hydroxyl groups of polyoxyalkylene polyols with alcohols or carboxylic acids.

Suited polyester polyols include condensed polyester polyols, lactone polyester polyols (polymer type) and polycarbonate diols.

Here, suited condensed polyester polyols include the polyols available by dehydrating condensation reaction of dibasic acids with glycol or triol; for example, products such as ethylene adipate, diethylene adipate, butylene adipate, trimethylolpropane adipate, may be mentioned.

A suited lactone polyester polyol may be obtained by ring-opening condensation reaction of ε-caprolactam.

Suited polycarbonate diols include those products obtainable by phosgenation reaction of polyols or by transesterification reaction of polyols with diphenyl carbonate.

Suited polyols having a backbone chain of carbon-carbon bonds include acrylic polyols, polybutadiene polyols, and polyvinyl alcohols.

In order to provide said liquid or heat-meltable, active hydrogen containing organic compound (A) according to the present invention, a combination of said polyether polyols, said polyester polyols of said polyols having a backbone chain of carbon-carbon bonds, and of said low-molecular-weight polyols (such as said polyhydric alcohols, which are preferably in liquid state at atmospheric temperature) may be used.

Suited compounds containing carboxyl groups include aliphatic polycarboxylic acids such as adipic acid, succinic acid, sebacic acid, azelaic acid, fumaric acid, maleic acid, dimerized linolenic acid; further aromatic polycarboxylic acids such as phthalic acid, isophthalic acid, terephthalic acid.

Suited compounds containing thiol groups include monothiols such as dodecylmercaptan, mercaptopropionic acid; further, dithiols such as hexanedithiol, dimercapto-1,8-dioxa-3,6-octane; and further polythiols such as reaction products of polyglycidyl compounds with hydrogen sulfide, and esterification products of mercaptopropionic acid or mercaptoglycolic acid with polyalcohols.

Suited compounds containing amino groups include aliphatic amines, alicyclic amines, heterocyclic amines, and aromatic amines. Here, suited aliphatic amines may include alkanolamines such as mono-, di-, and tri-ethanolamines, isopropanolamine, aminoethylethanolamine; further alkylamines having 1 to 20 carbon atoms; further alkylenediamines having 2 to 6 carbon atoms such as ethylenediamine, propylenediamine, hexamethylenediamine; and further polyalkylenepolyamines such as diethylenetriamine, triethylenetetramine. Here, suited alicyclic amines include isophoronediamine, cyclohexylenediamine, dicyclohexylmethanediamine. Here, suited heterocyclic amines include aminoethylpiperazine and those compounds mentioned in Japanese Kokoku Publication Sho-55-21044. Here, suited aromatic amines include aniline, phenylenediamine, diaminotoluene, xylylenediamine, methylenedianiline, diphenyletherdiamine.

The liquid or heat-meltable, active hydrogen containing compound (A) comprises a molecular weight generally in the range of from 100 to 100000, preferably in the range of from 500 to 50000, and even more preferred in the range of from 1000 to 20000.

In case, the compound (A) is a polyoxyalkylene polyol, then a polyoxyalkylene polyol comprising a hydroxyl value generally of from 5 to 280, preferably of from 10 to 200, and even more preferred of from 20 to 150 may be used.

The water-absorbent resin (B) or a hydrous gel thereof is prepared from a water-soluble monomer, suited water-soluble monomers include vinyl monomers containing carboxyl group(s) contaning vinyl monomers, phosphoric acid group(s) containing vinyl monomers, vinyl monomers phosphoric acid group (s) containing vinyl monomers and the corresponding salts thereof, further hydroxyl group(s) containing vinyl monomers, vinyl monomers ether group(s) containing vinyl monomers and ammonium group(s) containing vinyl monomers.

Here, suited carboxyl group(s) containing vinyl monomers include (meth)acrylic acid, crotonic acid, sorbic acid, maleic acid, itaconic acid, cinnamic acid, and the corresponding acid anhydrides thereof.

Here, suited sulfonic acid group(s) containing vinyl monomers include aliphatic and aromatic vinylsulfonic acids [e.g. vinylsulfonic acid, allylsulfonic acid, vinyltoluenesulfonic acid, styrenesulfonic acid], further, (meth)acrylsulfonic acids [e.g. sulfoethyl (meth)acrylate, sulfopropyl (meth)acrylate] and (meth)acrylamidosulfonic acids [e.g. 2-acrylamido-2-methylpropanesulfonic acid].

Here, suited phophonic acid group(s) containing vinyl monomers include 2-hydroxyethyl (meth)acryloyl phosphate and phenyl 2-acryloyloxyethyl phosphate.

These vinyl monomers may be used in the form of salts of said carboxylic, sulfonic, or phosphoric acids. Suited salts include alkali metal salts (e.g. sodium, potassium, lithium), further alkaline earth metal salts (e.g. calcium, magnesium), further ammonium salts, and salts with amines (e.g. alkylamines such as methylamine, trimethylamine, and alkanolamines such as triethanolamine, diethanolamine). Among these, preferred salts are alkali metal salts and, in particular, the sodium salts and the potassium salts.

Here, suited hydroxyl group(s) containing vinyl monomers include hydroxyethyl (meth)acrylate and hydroxypropyl (meth)acrylate.

Here, suited ether group(s) containing vinyl monomers include ethylene glycol monomethyl ether (meth)acrylate and trioxyethylene glycol (meth)acrylate.

Here, suited ammonium group(s) containing vinyl monomers include N,N,N-trimethyl-N-(meth)acryloyloxyethylammonium chloride and N,N,N-triethyl-N-(meth)acryloyloxyethylammonium chloride.

The precursor of a water-soluble monomer of said type is a compound becoming water-soluble by hydrolysis reaction; thus including methyl (meth)acrylate, ethyl (meth)acrylate, 2-ethylhexyl (meth)acrylate, vinyl acetate, and (meth)acrylonitrile.

The above-mentioned water-soluble monomers or the precursor thereof may be used allone per se or in form of a combination of two or more monomers of said type.

Among these water-soluble monomers are preferred carboxyl group(s) containing vinyl monomers, sulfonic acid group(s) containing vinyl monomers and the corresponding salts, thereof.

In the present invention, other vinyl monomers than the fore-mentioned vinyl monomers may be used, where necessary. Those other optional vinyl monomers may include aromatic vinyl monomers such as styrene, α-methylstyrene, hydroxystyrene, chlorostyrene; further unsaturated nitriles such as (meth)acrylonitrile; further (meth)acrylic esters such as alkyl (meth)acrylates having 1 to 30 carbon atoms containing alkyl groups, hydroxypolyoxyalkyleneether mono(meth) acrylates; further olefins such as ethylene, propylene; further fluorine-containing vinyl monomers such as perfluorooctylethyl methacrylate, perfluorooctylethyl acrylate; further amino group(s) containing vinyl monomers such as diaminoethyl methacrylate, morpholinoethyl methacrylate; and further modified silicone monomers having vinyl groups at both terminal ends.

Among these monomers, aromatic vinyl monomers, unsaturated nitriles, and (meth)acrylic esters are preferred with respect to copolymerizability and dispersion stability.

The in-situ polymerisation of the water-soluble monomer in oder to obtain the water-absorbent resin (B) may be facilitated by a crosslinking agent; suited crosslinking agents include copolymerizable crosslinking agents and other crosslinking agents. Here, suited copolymerizable crosslinking agents include compounds containing two polymerizable double bonds; and compounds containing at least one polymerizable double bond and at least one functional group reactive with said water-soluble monomer.

Here, suited compounds containing two polymerizable double bonds include:
① Bis(meth)acrylamide: N,N-C₁₋₆-alkylene bis(meth)acrylamides (e.g. N,N-methylenebisacrylamide).
② Polyesters obtainable by reacting a polyol or a polyepoxide with an unsaturated mono- or polycarboxylic acid, such as the di- or tri(meth)acrylates or di- or trimaleates, which are obtainable from ethylene glycol, trimethylolpropane, glycerol, polyoxyethylene glycol, polyoxypropylene glycol, or cyclohexene diepoxide and either (meth)acrylic acid or maleic acid.
③Carbamic esters obtainable by reacting a polyisocyanate [e.g. tolylene diisocyanate, hexamethylene diisocyanate, 4,4'-diphenylmethane diisocyanate, and NCO-containing prepolymers (obtainable by reaction of said polyisocyanates with compound containing active hydrogen atoms)] with hydroxyethyl (meth)acrylate.
④ Polyvinyl compounds such as divinylbenzene, divinyltoluene, divinylxylene, divinyl ether, divinyl ketone, trivinylbenzene.
⑤ Di- or poly(meth)allyl ethers of polyols: the poly(meth) allyl ethers of polyols [e.g. alkylene glycols, glycerol, polyalkylene glycols, polyalkylene polyols, carbohydrates, etc.] (such as polyethylene glycol diallyl ether, allylstarch, allyl-cellulose).
⑥ Polycarboxylic polyallyl esters such as diallyl phthalate, diallyl adipate.
⑦ The esters of unsaturated mono- or polycarboxylic acids with mono(meth)allyl ethers of polyols such as (meth)acrylic esters of monoallyl ether of polyethylene glycol.
⑧ Polyallyloxyalkanes such as tetraallyloxyethane.

Referring to those crosslinking agents comprising compounds each containing at least one polymerizable double bond and at least one functional group reactive with said water-soluble monomer, the functional group thereof may be reactive to a carboxyl group, to a sulfonic acid group, to a phosphoric acid group, to a hydroxyl group, or to a ammonium group or amine based group in said water-soluble monomer; suited functional groups include hydroxyl groups, epoxy groups, and tertiary amino group. Suited compounds of said type include ethylenically unsaturated, hydroxyl group(s) containing compounds [e.g. N-methylol-(meth)acrylamide], ethylenically unsaturated, epoxy groups(s) containing compounds [e.g. glycidyl (meth)acrylate], and ethylenically unsaturated, tertiary amino group(s) containing compounds [e.g. dimethylaminoethyl (meth)acrylate, diethylaminoethyl (meth)acrylate].

With respect to other crosslinking agents, polyvalent metal salts such as calcium oxide, zinc diacetate and other may be suited and may be used.

Among these above-mentioned various crosslinking agents, preferred are copolymerizable crosslinking agents, and among these N,N-methylenebisacrylamide, ethylene glycol diacrylate, trimethylolpropane triacrylate, and tetrallyloxyethane are particularly preferred, crosslinking agents.

During the in-situ polymerisation of the water soluble monomer, a polysaccharide may be incorporated in order to obtain the water-absorbent resin (B); suited polysaccharides include starch and cellulose products. Suited starch products include raw starches such as sweet potato starch, white potato starch, wheat starch, corn starch, rice starch, and modified starches such as oxidized starch, dialdehyde starch, starch alkyl ethers, starch aryl ethers, hydroxyalkyl starch and starch aminoethyl ether.

The above-mentioned cellulose products include various celluloses available from wood, leaf, stem or cane, bast fiber, comose hair, and modified celluloses such as cellulose alkyl ethers, organic acid esters of cellulose, oxidized cellulose and cellulose hydroxyalkyl ethers.

The dispersion of the water-absorbent resin (B) within the organic compound (A) according to the present invention may be obtained according to anyone of the following preparation methods. In the following description, said water-soluble monomer or the precursor thereof is briefly termed as (1), any the other vinyl monomer or monomers are briefly termed as (1') and the crosslinking agent and/or the polysaccharide are briefly termed as (2).

### Methode of Preparing a Dispersion

① The compound (A) or, where applicable, a liquid mixture of the compound (A) and of an emulsifier is added dropwise to an aqueous solution or dispersion of (1) and (2), plus (1') if optionally desired; the resulting mixture is heated, optionally in the presence of a radical polymerization catalyst, or is irradiated with radiation, with an electron beam, or with ultraviolet light.
② An aqueous solution or dispersion of (1) and (2), plus (1'), if optionally desired is added dropwise to the compound (A), and the resulting mixture is treated in the same manner as described in ①.
③ An aqueous solution or dispersion of (1) and (2), plus (1') if optionally desired is added dropwise to a mixture of (A) and water; thereafter, the resulting mixture is treated in the same manner as described in ①.
④ The components (1) and (2), plus (1') if optionally desired, are added dropwise to a dispersion consisting of the compound (A), an emulsifier, and water, optionally in the presence of a radical polymerization catalyst, and the resulting mixture is treated in the same manner as described in ①.

The total proportion of [(1) and (2), plus (1') if optionally desired] amounts generally 2 to 120%, preferably 10 to 100%, and even more preferred 30 to 90%, each based on the weight of (A).

The proportion of (1) is generally not less than 50%, and amounts preferably 60 to 99.9%, and amounts even more preferred 75 to 95%, each based on the total weight of (1) and (2), plus (1') if optionally desired.

The proportion of (2), is generally 0.001 to 20%, preferably 0.01 to 10%, and even more preferred 0.1 to 5%, each based on the total weight of (1) and (2), plus (1') if optionally desired. When the proportion of (2) is less than 0.001% or exceeds 20%, a sufficient water absorption capacity can not be obtained.

The proportion of other vinyl monomer(s) (1') is generally 0 to 20%, preferably 0 to 10%, and even more preferred 0 to 5%, each based on the total weight of (1) and (2), plus (1') if optionally desired.

The proportion of water should amount essentially 5 to 50% and preferably 5 to 45% and even more preferred 10 to 30%, each based on the weight of the dispersion. When the proportion of water exceeds 50% or is less than 5%, then obtaining a dispersion is difficult.

Suited radical polymerization catalysts include azo compounds [e.g. azobisisobutyronitrile, azobiscyanovaleric acid, 2,2'-azobis(2-aminodipropane) dihydrochloride], inorganic peroxides [e.g. hydrogen peroxide, ammonium persulfate, potassium persulfate, sodium persulfate], organic peroxides [e.g. benzoyl peroxide, di-t-butyl peroxide, cumene hydroperoxide, peroxysuccinic acid, di(2-ethoxyethyl)peroxydicarbonate], redox catalysts [combinations of a reducing agent such as an alkali metal sulfite or bisulfite, ammonium sulfite, ammonium bisulfite, or ascorbic acid with an oxidizing agent such as an alkali metal persulfate, ammonium persulfate, or peroxides], and various combinations of such catalysts. The proportion of the catalyst amounts generally 0.0005 to 5% and amounts preferably 0.001 to 2%, each based on the total weight of (1) and (2), plus (1') if optionally desired.

Suited emulsifiers include nonionic surfactants [e.g. lauryl alcohol-ethylene oxide adducts, lauric acid-ethylene oxide adducts, sorbitan monolaurate, stearyl amine-ethylene oxide adducts, nonylphenol-ethylene oxide adducts], anionic surfactants [e.g. lauryl alcohol sulfate, sodium alkylbenzenesulfonate, aerosol OT, dithiophosphoric ester salts], cationic surfactants [e.g. laurylamine acetate, monostearate-triethanolamine formate], and various combinations of such surfactants. Preferred are nonionic surfactants.

The proportion of the emulsifier amounts generally 0 to 10 weight % and amounts preferably 0.1 to 5 weight %, each based on the complete weight of the dispersion.

The particle diameter of the dispersed resin (B) or of a hydrous gel thereof in the dispersion according to the present invention amounts generally 0.01 to 100 µm, preferably 0.05 to 10 µm, and amounts even more preferred 0.1 to 5 µm. When the particle diameter of the dispersed material exceeds 100 µm, then the stability of the dispersion is sacrificed, because particles having diameters smaller than 0.01 µm cause troubles, for example, cause particle aggregation.

The proportion of (B) amounts 1 to 70%, amounts preferably 5 to 65%, and amounts even more preferred 20 to 60%, each based on the combined weight of (A) and (B). When the proportion of the vinyl polymer chain amounts more than 70%, then the dispersion tends to cause particle aggregation and further tends become unstable.

The proportion of (A) amounts generally 30 to 99%, amounts preferably 35 to 95%, and amounts more preferred 40 to 80%, each based on the complete weight of the dispersion. When the proportion of (A) is smaller than 30%, then the dispersion tends to particle aggregation, and further tends to become unstable.

The dispersion according to the present invention may be used for the production of water-absorbent polyurethane resins. A water-absorbent polyurethane resin may be obtained by reacting the dispersion of the invention, after removal of water where necessary, with an organic polyisocyanate, optionally in the presence of a urethane forming catalyst, a crosslinking, agent, a blowing agent, a foam-conditioning agent, and other well known additives. This process may be performed according to known production methods, such as the one-shot process, the semi-prepolymer process, or the prepolymer process.

Shaped articles made of a water-absorbent polyurethane resin, whether foamed or unfoamed, may be obtained by performing the above-mentioned reaction in a closed mold or in an open mold using a low-pressure or a high-pressure molding equipment.

Generally, a variety of polyisocyanates heretofore used in conventional polyurethane production process may be used. Therefore, suited polyisocyanates include aromatic polyisocyanates containing 6 to 20 carbon atoms (not regarding the carbon atoms in the NCO groups) (e.g. 2,4- and/or 2,6-tolylene diisocyanate (TDI), crude TDI, 2,4'- and/or 4,4'-diphenylmethane diisocyanate (MDI), crude MDI [phosgenation reaction product of crude diaminophenyl methane [the condensation product of formaldehyde with an aromatic amine (aniline) or a mixture thereof: a mixture of diaminodiphenylmethane and a small proportion (e.g. 5 to 20 weight %) of a tri- or polyfunctional polyamine), polyallyl polyisocyanate (PAPI)], further, aliphatic polyisocyanates containing 2 to 18 carbon atoms (e.g. hexamethylene diisocyanate, lysine diisocyanate); further alicyclic polyisocyanates containing 4 to 15 carbon atoms (e.g. isophorone diisocyanate, dicyclohexylmethane diisocyanate); further arylalkyl polyisocyanates containing 8 to 15 carbon atoms (e.g. xylylene diisocyanate); further the corresponding modified polyisocyanates (modification products of said polyisocyanates which contain urethane, carbodiimide, allophanate, urea, biuret, urethodione, uretoneimine, isocyanurate, or oxazolidone group); further the other polyisocyanates mentioned in Japanese Kokai Publication Sho-61-76517; and further mixtures of two or more of said polyisocyanates. Preferred among these are those polyisocyanates which are readily available from commercial sources, such as 2,4- and 2,6-TDI, mixtures of such isomers, crude TDI, 4,4'- and 2,4'-MDI, mixtures of such isomers, PAPI which is also known as crude MDI, and modified polyisocyanates derived from any of those polyisocyanates and containing any of urethane, carbodiimide, allophanate, urea, biuret, and isocyanurate groups.

The isocyanate index [the equivalent ratio of NCO/group containing active hydrogen atom x 100] for use in the production of polyurethane according to the present invention amounts generally 80 to 140, preferably 85 to 120, and even more preferred 95 to 115. It is possible to introduce polyisocyanurates into the polyurethane by increasing the isocyanate index in a very large scale (e.g. 300 to 1000 or even higher).

Suited urethane forming catalysts include those catalysts which are routinely used in the polyurethane forming process [such as amine catalysts (e.g. tertiary amines such as triethyleneamine, N-ethylmorpholine); further tin catalysts (stannous octanate, dibutyltin dilaurate); and other metal catalysts (lead octanate etc.)]. The proportion of the catalyst amounts about 0.001 to about 5% based on the combined weight of the dispersion of the invention and the organic polyisocyanate.

Suited blowing agents include methylene chloride, monofluorotrichloromethane, and water, to name only a few examples.

Suited foam-conditioning agents include silicone surfactants (e.g. polysiloxane-polyoxyalkylene copolymer).

Suited other additives include the known species of flame retardants, reaction retardants, coloring agents, mold release agents, aging inhibitors, antioxidants, plasticizers, and fungicides, as well as carbon black and other fillers.

### BEST MODE OF CARRYING OUT THE INVENTION

The following examples are intended to merely illustrate the present invention in further detail and should by no means be construed as defining the scope of the invention. In the following examples, all stated parts are parts by weight and all stated percents are percents by weight.

The compositions of the starting materials used in Examples 1 to 5, Application Examples 1 to 4, and Comparative Application Examples 1 to 4 are as follows:

### Active hydrogen-containing compound (A):

Polyol A1: A polyether polyol (EO content, 13%) with a hydroxyl value of 33 as obtainable by sequential addition of PO and EO in that order to glycerol.

Polyol A2: A polyether polyol with a hydroxyl value of 33 as obtainable by addition of PO to glycerol.

Polyol A3: A polyether polyol with a hydroxyl value of 55 as obtainable by addition of PO to glycerol.

Vinyl monomer (1): Acrylic acid (Nippon Shokubai).

Copolymerizable crosslinking agent (2): Methylenebisacrylamide (Nitto Chemical Industry).

Radical polymerization catalyst: 2,2'-azobis(2-aminodipropane)dihydrochloride.

Emulsifier: Sorbitan monolaurate.

Amine catalyst: Triethylenediamine (DABCO).

Tin catalyst: Stannous octanate (T-9).

Isocyanate: Tolylene diisocyanate (TDI-80).

Foam-conditioning agent: A silicone foam-conditioning agent (Nippon Unicar "L-520").

Water-absorbent resin: Sanfresh ST-500TM (Sanyo Chemical Industries, a starch-acrylate graft).

### Determination of volume-based particle diameter:

The water-absorbent resin dispersion was diluted with the same polyoxyalkylene compound as used in the same dispersion to a laser light transmittance of 70 to 90%. The dispersion particle diameter was determined, by means of a particle size distribution analyzer (Laser diffraction/scattering particle size distribution analyzer LA-700 Horiba). The particle diameters thus obtained are shown in Table 2. Each diameter value shown in Table 2 is the particle diameter corresponding to the 50% cumulative distribution of the volume-based particle diameter distribution.

### Evaluation of moisture absorption-desorption kinetics:

The polyurethane foam was maintained in a constant-temperature, (25°C) and constant-humidity chamber controlled at 80% R.H.; and the time dependant amount of moisture absorption was determined. Thereafter, the foam was maintained in a constant-temperature (25°C) and constant-humidity chamber controlled at 40% R.H.; and the time dependant amount of moisture desorption was determined. The amounts of water absorption and water desorption are expressed in the amount (in grams) of water absorbed and desorped per 50000 cm³ of apparent polyurethan foam volume.

The amount of absorption and the absorption rate were determined as follows using deionized water:

### Amount of absorption:

One gram of the absorbent sample was placed in a 250-mesh nylon tea bag, which was then immersed in a large excess of 0.9% isotonic sodium chloride solution. After 1 hour of absorption, the tea bag was taken out, drained for 15 minutes, and weighed to find the weight gain. This weight gain value was regarded as the amount of absorption.

### Absorption rate:

One gram of the absorbent sample was placed in a 250-mesh nylon tea bag, which was then immersed in a large excess of isotonic sodium chloride solution. After 2 minutes of absorption, the tea bag was taken out, drained for 15 minutes, and weighed to find the weight gain. This weight gain value was taken as the absorption rate.

### Examples 1 to 5:

In a 1L four-necked flask fitted with a temperature regulator, vacuum stirrer, nitrogen inlet, and exit port, water, sodium hydroxide, vinyl monomer (1), copolymerizable crosslinking agent (2), radical polymerization catalyst, and emulsifier were admixed at a temperature not exceeding 40 °C; the amount of each component is stated in Table 1. Then, polyol A1 and/or A2 was added portionwise under agitation in the total amount indicated in Table 1 to prepare a W/O emulsion. Then, the polymerization of vinyl monomer (1) was carried out under agitation at 50-80°C, to provide each a water-absorbent resin dispersion (D1 to D5).

### Example 6:

A 2L four-necked flask fitted with a temperature regulator, vacuum stirrer, nitrogen inlet, and exit port was charged with 350 parts of 25% aqueous sodium hydroxide solution and 200 parts of vinyl monomer (1) (acrylic acid available from Nippon Shokubai) at a temperature not exceeding 40°C, and following mixing under agitation, 0.02 part of copolymeric crosslinking agent (2) (methylenebisacrylamide available from Nitto Chemical Industry) were added. The whole mixture was further stirred to prepare a homogeneous solution (①). Separately, in a 500 ml Erlenmeyer's flask, 400 parts of polyoxyalkylene compound (A) [a polyether polyol (EO content 20%) (Sannix KC-209, Sanyo Chemical Industries) with an hydroxy value of 34 as obtainable by sequential addition of propylene oxide (PO) and ethylene oxide (EO) in that order to glycerol] and 4 parts of emulsifier (Emulmin 140, Sanyo Chemical Industries) were stirred to provide a homogeneous solution (②). The solution (②) was added continuously within 1 hour to the solution (①) while the mixture was stirred at a temperature not exceeding 40°C, and nitrogen gas was bubbled through the mixture to provide a W/O emulsion. A beforehand prepared solution obtained by dissolving 0.02 part of radical polymerization catalyst (ADVN, Otsuka Chemical) in 0.1 part of toluene, was added to this emulsion and the composition was heated at 50°C under agitation to provide a water-absorbent resin dispersion (D6).

### Example 7:

The procedure of Example 6 was repeated except that the following, polyoxyalkylene chain-containing compound was used, in lieu of the polyoxyalkylene compound as used in Example 6, to provide a water-absorbent resin dispersion (D7).

Polyoxyalkylene chain-containing compound: A polyether polyol (EO content 70%) (Sannix FA-103, Sanyo Chemical Industries) with an hydroxy value of 50 as obtainable by sequential addition of PO and EO in that order to glycerol in an amount of 600 parts.

### Example 8:

The procedure of Example 6 was repeated except that 2-acrylamido-2-methylpropanesulfonic acid was used in lieu of the vinyl monomer as used in Example 6 to provide a water-absorbent resin dispersion (D8).

The particle diameter and viscosity values of the dispersions D6 to D8 as obtained in Examples 6 to 8 are presented in Table 2.

**Table 1:**

| Dispersion | **Example** | | | | |
|---|---|---|---|---|---|
| | 1 | 2 | 3 | 4 | 5 |
| Vinyl monomer (1) | 120 | 120 | 170 | 170 | 120 |
| Copolymerizable crosslinking agent (2) | 3 | 3 | 3 | 3 | 3 |
| Water | 190 | 190 | 190 | 190 | 190 |
| Sodium hydroxide | 50 | 50 | - | - | 50 |
| Radical polymerization catalyst | 2 | 2 | 2 | 2 | 2 |
| Emulsifier | 40 | 40 | 40 | 40 | 40 |
| Polyol A1 | 600 | - | - | 600 | 300 |
| Polyol A2 | - | 600 | 600 | - | 300 |
| Polymerization temperature (°C ) | 70 | 70 | 70 | 70 | 70 |
| Polymerization time (hr) | 4 | 4 | 4 | 4 | 4 |
| Viscosity | 5000 | 5200 | 6900 | 5300 | 5100 |
| Volume-based mean particle diameter (µm) | 1.5 | 5.0 | 53.9 | 1.0 | 2.8 |

**Table 2:**

| | Volume-based mean particle diameter (µm) | Viscosity (CPS/25°C) |
|---|---|---|
| Example 6 | 0.88 | 8200 |
| Example 7 | 1.27 | 5200 |
| Example 8 | 0.52 | 4800 |

### Application Example 1:

Dispersion D1, polyol A3, water, DABCO, and L-520 were mixed in the amounts as indicated in Table 3, and the temperature of the mixture was adjusted to about 25°C . Then T-9 was added in the amount indicated in Table 3, and the resulting mixture was stirred for 10 seconds. To this mixture was added TDI-80, beforehand adjusted to 25°C, in the amount indicated in Table 3, and the thus resulting mixture was stirred for 7 seconds to provide a polyurethane foam F1. The foam characteristics (foam density, water absorption-desorption ability) of this polyurethane foam are indicated in Table 4.

### Application Examples 2 to 4:

The dispersions as obtained in Examples 6, 7, or 8, water, DABCO, and L-520 were mixed in the amounts as indicated in Table 3 and, the temperature of the mixture was adjusted to about 25°C. Then, T-9 was added in the amount indicated in Table 3, and the resulting mixture was stirred for 10 seconds. To this mixture was added TDI-80, beforehand adjusted to 25°C in the amount as indicated in Table 3, and the thus obtained mixtures were each stirred for 7 seconds to provide each a polyurethane foam F2 to 4. The foam characteristics (foam density, 0.9% isotonic sodium chloride solution absorption amount and rate) of these polyurethane foams are indicated in Table 5.

### Comparative Application Examples 1 and 2:

Polyurethane foams F5 and F6 were prepared using the components as indicated in Table 3 by repeating the procedure of Application Example 1. The foam characteristics (foam density and water absorption-desorption ability) of these polyurethane foams are indicated in Table 4.

### Comparative Application Examples 3 and 4:

Polyurethane foams F7 and F8 were prepared using the same polyoxyalkylene compound as used in Example 7 (designated Polyol A4) in the ammounts as indicated in Table 3 by repeating the procedure of Application Examples 2 to 4. The foam characteristics (foam density, 0.9% isotonic sodium chloride solution absorption amount and rate) of the resulting polyurethane foams are indicated in Table 5.

**Table 3**

| | Foams | | | | | | | |
|---|---|---|---|---|---|---|---|---|
| | F1 | F2 | F3 | F4 | F5 | F6 | F7 | F8 |
| Dispersion D1 | 82.5 | - | - | - | - | - | - | - |
| Dispersion D6 | - | 92.5 | - | - | - | - | - | - |
| Dispersion D7 | - | - | 92.9 | - | - | - | - | - |
| Dispersion D8 | - | - | - | 91.8 | - | - | - | - |
| Water-absorbent resin | - | - | - | - | 9.0 | - | - | 27.9 |
| Polyol A1 | - | - | - | - | 73.5 | 50.0 | - | - |
| Polyol A3 | 50.0 | - | - | - | 50.0 | 50.0 | - | - |
| Polyol A4 | - | - | - | - | - | - | 91.0 | 65.0 |
| Water | 4.5 | 0.2 | 0.1 | 0.1 | 4.5 | 4.5 | 0.1 | 0.1 |
| DABCO | 0.1 | 0.1 | 0.1 | 0.1 | 0.1 | 0.1 | 0.1 | 0.1 |
| L-520 | 1.2 | 1.0 | 1.0 | 1.0 | 1.2 | 1.2 | 1.0 | 1.0 |
| T-9 | 0.5 | 0.09 | 0.05 | 0.14 | 0.5 | 0.5 | 0.03 | 0.05 |
| TDI-80 | 54.8 | 6.2 | 5.9 | 6.9 | 54.8 | 54.8 | 7.9 | 5.9 |

**Table 4:**

| | Foams | | |
|---|---|---|---|
| | F1 | F5 | F6 |
| Foam density(kg/cm³) | 18.4 | 18.8 | 21.8 |
| Amount of absorption after 2 hrs have been passed | 41 | 30 | 6 |
| after 4 hrs have been passed | 57 | 42 | 6 |
| after 6 hrs have been passed | 60 | 43 | 7 |
| after 21 hrs have been passed | 56 | 43 | 7 |
| Amount of desorption after 1.5 hrs have been passed | 56 | 43 | 7 |

**Table 5:**

| | Foam density (g/cm³) | Amount of absorption (g/g) | Absorption rate (g/g) |
|---|---|---|---|
| F2 | 0.23 | 24 | 23 |
| F3 | j 0.48 | 30 | 29 |
| F4 | 0.39 | 41 | 39 |
| F7 | 0.42 | 2 | 1 |
| F8 | 0.45 | 9 | 6 |

It is apparent from Table 4 and 5 that use of the highly water-absorbent dispersion of the present invention provides a dramatic improvement of the water absorption capacity of the polyurethane foams.

### INDUSTRIAL APPLICABILITY

As described in detail above, the highly water-absorbent dispersion of the present invention is a uniform dispersion of water-absorbent resin in a microfine particulate form not exceeding a particle diameter of 100 µm, and has excellent dispersion stability. Moreover, using the dispersion of the present invention in the preparation of polyurethan resin, a highly water-absorbent urethane resin may be obtained. This polyurethane resin exhibits excellent water absorption ability (both amount of absorption and absorption rate).

Due to the above-stated beneficial effects, the water-absorbent resin dispersion and the absorbent products obtainable therefrom according to the present invention may be used as a variety of sanitary products such as paper diapers and napkins and other absorbent products. They also find application, with remarkable performance characteristics, in the fields of sealants, of against staleness preserving matrices for fresh vegetables and fruits, of drip absorbent trays or sheets, of moistening or humidity regulators, rice plant protective sheets, concrete cure sheets, and water cutoff materials for communication equipments and optical fiber cables.

## Claims

1. A water-absorbent resin dispersion comprising a water-absorbent resin (B) or a hydrous gel thereof dispersed in a liquid or heat-meltable active hydrogen-containing organic compound (A), wherein said (B) is formed upon in situ polimerization of a water-soluble monomer or a precursor thereof and a crosslinking agent and/or a polysaccharide in said (A), and wherein a proportion of (B) relative to the combined weight of (A) and (B) is 1 to 70 %.

2. The dispersion according to claim 1 wherein (A) is a polyol.

3. The dispersion according to claim 2 wherein said polyol is at least one member selected from the group consisting of polyether polyol, polyester polyol, polybutadiene polyol, polyvinyl alcohol, and acrylic polyol.

4. The dispersion according to claim 1 wherein either said (B) or said hydrous gel thereof dispersed in said (A) has a mean particle diameter of 0.01 to 100 µm.

5. The dispersion according to claim 1 wherein said (B) or said hydrous gel thereof is formed in said (A) by in situ polymerization of at least one vinyl monomer having a carboxyl or sulfonic acid group and a copolymerizable crosslinking agent, plus one or more other vinyl monomers where necessary, in the presence of water.

6. The dispersion according to claim 5 wherein the proportion of water available in the formation of said (B) or said hydrous gel thereof is 5 to 50 weight % based on the total weight of said (A), (B), and water.

7. The dispersion according to claim 5 wherein said (B) or said hydrous gel thereof has been formed by in situ polymerization in the presence of an emulsifier as well as said water.

8. A polyurethane composition comprising a water-absorbent resin (B) or a hydrous gel thereof dispersed in a polyurethane with a mean dispersoid particle diameter of 0.01 to 100 µm, wherein said (B) is formed upon in situ polymerization of a water-soluble monomer or a precursor thereof and a crosslinking agent and/or a polysaccharide in a polyol which is a precursor of said polyurethane.

9. A process for producing a polyurethane resin which comprises subjecting the dispersion claimed in claim 2 to reaction with an organic polyisocyanate compound.

10. A process for producing a polyurethane foam which comprises subjecting the dispersion claimed in claim 2 to reaction with an organic polyisocyanate compound in the presence of a blowing agent, optionally together with a catalyst, a foam-conditioning agent, and other additives.

## Revendications

1. Une dispersion de résine absorbant de l'eau,
comprenant une résine absorbant de l'eau (B) ou son gel aqueux dispersé dans un composé organique (A) liquide ou fusible par échauffement, qui comprend de l'hydrogène actif ;
**dans laquelle** cette résine absorbant de l'eau (B) est formée par polymérisation in situ d'un monomère soluble dans l'eau ou d'un précurseur de ce monomère et un agent de réticulation et/ou un polysaccharide dans ce composé organique (A), la part de (B) par rapport au poids total de (A) et (B) étant de 1 à 70%.

2. La dispersion de résine absorbant de l'eau conformément à la revendication 1,
**dans laquelle** le composé organique (A) est un polyol.

3. La dispersion de résine absorbant de l'eau conformément à la revendication 2,
**dans laquelle** le polyol est au moins un des polyols suivants, un polyol de polyéther, un polyol de polyester, un polyol de polybutadiène, un polyol de polyvinyle et un polyol acrylique.

4. La dispersion de résine absorbant de l'eau conformément à la revendication 1,
**dans laquelle** le diamètre moyen des particules de cette résine absorbant de l'eau (B) ou de son gel aqueux dispersé dans le composé organique (A) est de 0,01 à 100 µm.

5. La dispersion de résine absorbant de l'eau conformément à la revendication 1,
**dans laquelle** cette résine absorbant de l'eau (B) ou son gel aqueux dispersé dans le composé organique (A) est formée par polymérisation in situ d'au moins un monomère de vinyle ayant un groupe acide carbonique ou un groupe acide sulfonique, et un agent de réticulation copolymérisable plus, si nécessaire, un ou plusieurs autres monomères de vinyle, en présence d'eau.

6. La dispersion de résine absorbant de l'eau conformément à la revendication 5,
**dans laquelle** la part d'eau disponible pour la formation de cette résine absorbant de l'eau (B) ou de son gel aqueux est de 5 à 50% en poids par rapport au poids total du composé organique (A), de la résine absorbant de l'eau (B) et d'eau.

7. La dispersion de résine absorbant de l'eau conformément à la revendication 5,
**dans laquelle** la résine absorbant de l'eau (B) ou son gel aqueux est formé par polymérisation in situ en présence d'un émulsifiant et d'eau.

8. Composition de polyuréthane
comprenant une résine absorbant de l'eau (B) ou son gel aqueux dispersé dans un polyuréthane,
le diamètre moyen des particules de la matière dispersée étant de 0,01 à 100 µm,
**dans laquelle** la résine absorbant de l'eau (B) est formée par polymérisation in situ d'un monomère soluble dans l'eau ou d'un précurseur de ce monomère et un agent de réticulation et/ou un polysaccharide dans un polyol qui est un précurseur du polyuréthane.

9. Procédé pour la production d'une résine de polyuréthane,
par lequel la dispersion conformément à la revendication 2 est soumise à une réaction avec un composé organique de polyisocyanate.

10. Procédé pour la production d'une mousse de polyuréthane,
par lequel la dispersion conformément à la revendication 2 est soumise à une réaction avec un composé organique de polyisocyanate en présence d'un agent gonflant, en option ensemble avec un catalyseur, un agent moussant et d'autres additifs.

## Patentansprüche

1. Wasserabsorbierende Harzdispersion,
die enthält ein wasserabsorbierendes Harz (B) oder dessen wässriges Gel,
das dispergiert ist in einer flüssigen, oder bei Erwärmung schmelzbaren, organischen Verbindung (A), die aktiven Wasserstoff enthält;
**wobei** dieses wasserabsorbierende Harz (B) gebildet wird bei einer in situ-Polymerisation eines wasserlöslichen Monomeren oder dessen Vorstufe und eines Vernetzungsmittels und/oder eines Polysaccharid in dieser organischen Verbindung (A), wobei der Anteil an (B) - bezogen auf das Gesamtgewicht von (A) und (B)-1 bis 70 % ausmacht.

2. Wasserabsorbierende Harzdispersion nach Anspruch 1,
**wobei** diese organische Verbindung (A) ein Polyalkohol ist.

3. Wasserabsorbierende Harzdispersion nach Anspruch 2,
**wobei** dieser Polyalkohol wenigstens einer der folgenden Polyalkohole ist, nämlich ein Polyether-polyalkohol, ein Polyester-polyalkohol, ein Polybutadienpolyalkohol, ein Polyvinylalkohol oder ein Acryl-polyalkohol.

4. Wasserabsorbierende Harzdispersion nach Anspruch 1,
**wobei** entweder dieses wasserabsorbierende Harz (B) oder dessen wässriges Gel, die in dieser organischen Verbindung (A) dispergiert sind, einen mittleren Teilchendurchmesser von 0,01 bis 100 µm aufweisen.

5. Wasserabsorbierende Harzdispersion nach Anspruch 1,
**wobei** dieses wasserabsorbierende Harz (B) oder dessen wässriges Gel in dieser organischen Verbindung (A) gebildet wird durch in situ-Polymerisation von wenigstens einem, eine Carbonsäuregruppe oder eine Sulfonsäuregruppe aufweisenden Vinylmonomeren, und einem copolymerisierbaren Vernetzungsmittel, soweit erforderlich zuzüglich einem oder mehreren anderen Vinylmonomeren, in Gegenwart von Wasser.

6. Wasserabsorbierende Harzdispersion nach Anspruch 5,
**wobei** der Wasseranteil, der bei der Bildung von diesem wasserabsorbierenden Harz (B) oder dessen wässrigem Gel zur Verfügung steht, 5 bis 50 Gew.-% ausmacht, bezogen auf das Gesamtgewicht von dieser organischen Verbindung (A), diesem wasserabsorbierenden Harz (B) und Wasser.

7. Wasserabsorbierende Harzdispersion nach Anspruch 5,
**wobei** dieses wasserabsorbierende Harz (B) oder dessen wässriges Gel gebildet worden ist durch in situ-Polymerisation in Gegenwart von einem Emulgator und Wasser.

8. Polyurethan-Zusammensetzung,
die enthält ein wasserabsorbierendes Harz (B) oder dessen wässriges Gel, das dispergiert ist in einem Polyurethan,
wobei das dispergierte Material einen mittleren Teilchendurchmesser von 0,01 bis 100 µm aufweist,
**wobei** dieses wasserabsorbierende Harz (B) gebildet wird bei einer in situ-Polymerisation eines wasserlöslichen Monomeren oder dessen Vorstufe und eines Vernetzungsmittels und/oder eines Polysaccharid in einem Polyalkohol, bei dem es sich um eine Vorstufe für dieses Polyurethan handelt.

9. Verfahren zur Herstellung eines Polyurethanharzes,
**wobei** die Dispersion nach Anspruch 2 mit einer organischen Polyisocyanatverbindung umgesetzt wird.

10. Verfahren zur Herstellung eines Polyurethanschaums,
**wobei** die Dispersion nach Anspruch 2 mit einer organischen Polyisocyanatverbindung in Gegenwart eines Treibmittels umgesetzt wird, wahlweise zusammen mit einem Katalysator, einem Schaumregelungsmittel und anderen Additiven.
